# EUROPÄISCHE PATENTANMELDUNG

(11) **EP 0 634 609 A2**
(43) Veröffentlichungstag der Anmeldung: **18.01.1995**
(21) Anmeldenummer: 94104134.5
(22) Anmeldetag: 17.03.1994
(51) Int. Cl.: F23J 13/02, F16L 7/00, E04F 17/02

(54) **Befestigungsvorrichtung für Abstandhalter an einem Innenrohrelement**

(30) Priorität: 16.07.1993 DE 4323874
(71) Anmelder: JACOB PLEIN-WAGNER SÖHNE STEINZEUGWARENFABRIK GmbH + Co. KG, D-54662 Speicher (DE)
(72) Erfinder: Schröder, Peter, D-54662 Speicher (DE); Anfossy, Alain M., D-54662 Speicher (DE)
(74) Vertreter: Serwe, Karl-Heinz, Dipl.-Ing.

(57) **Zusammenfassung**

Befestigungsvorrichtung für Abstandhalter an einem Innenrohrelement, vorzugsweise an einem Innenrohrelement aus Schamotte, Beton od. dgl. eines mehrschaligen Schornsteins, gekennzeichnet durch einen auf der Außenwandung des Innenrohrelementes (1) angeordneten umlaufenden Spannring (3), wobei im Abstand zueinander zwischen Spannring und Außenwandung in Rohrlängsrichtung verlaufende Durchtrittsöffnungen vorhanden sind, in die jeweils ein Abstandhalterelement (4) mit einem in Rohrlängsrichtung verlaufenden Anlageschenkel (5) einsetzbar ist.

Die Anlageschenkel (5) der Abstandhalterelemente (4) haben eine Rastnase od. dgl. zum Einrasten am oder unter dem Spannring (3).

## Beschreibung

Die Erfindung betrifft eine Befestigungsvorrichtung für Abstandhalter an einem Innenrohrelement, vorzugsweise an einem Innenrohrelement aus Schamotte, Beton od. dgl eines mehrschaligen Schornsteins.

Die Innenrohrsäule eines mehrschaligen Schornsteines muß wegen der auftretenden Wärmebelastung in Schornsteinlängs- und -querrichtung verschiebbar im Schornstein angeordnet sein. Bei mehrschaligen Schornsteinen, bei denen zwischen dem Innenrohrelement und der umgebenden Schale ein freier Ringspalt vorhanden ist, ist es daher notwendig, die Innenrohrsäule in Abständen gegenüber der Schale abzustützen, damit ein Knicken vermieden wird.

Dies erfolgt in bekannter Weise mit Hilfe von Abstandhaltern, die beim Aufbau des Schornsteins entweder an der Außenmantelung oder am Innenrohr befestigt werden, wobei nicht an jedem Innenrohrelement bzw. Außenrohrelement Abstandhalter befestigt werden müssen, sondern jeweils diese Abstandhalter in größeren Abständen angeordnet werden.

Dieses Befestigen der Abstandhalter ist relativ mühsam und zeitaufwendig. Da auch nicht an jedem Rohrelement Abstandhalter befestigt werden müssen, zeigt die Erfahrung, daß oftmals das Einbringen der Abstandhalter vergessen wird.

Die Aufgabe der Erfindung besteht darin, eine Befestigungsvorrichtung der eingangs genannten Art vorzuschlagen, die das Einbringen der notwendigen Abstandhalter erleichtert und ein Vergessen nahezu unmöglich macht.

Diese Aufgabe wird gelöst durch einen auf der Außenwandung des Innenrohrelementes angeordneten umlaufenden Spannring, wobei im Abstand zueinander zwischen Spannring und Außenwandung in Rohrlängsrichtung verlaufende Durchtrittsöffnungen vorhanden sind, in die jeweils ein Abstandhalterelement mit einem in Rohrlängsrichtung verlaufenden Anlageschenkel einsetzbar ist.

Vorteilhaft haben die Anlageschenkel der Abstandhalterelemente eine Rastnase od. dgl. zum Einrasten am oder unter dem Spannring.

Vorzugsweise weisen zur Verdrehsicherung die Anlageschenkel bzw. die Durchtrittsöffnungen in Rohrumfangsrichtung eine ausreichende Breite auf. Vorteilhaft hat zur Verdrehsicherung der Anlageschenkel zwei im Abstand zueinander verlaufende Schenkelabschnitte, die in zugeordnete Durchtrittsöffnungen einrastbar sind.

Vorzugsweise ist der Spannring nahe einem Rohrende am Innenrohrelement angeordnet.

Vorteilhaft sind mindestens vier Durchtrittsöffnungen zwischen Spannring und Außenwandung im Abstand zueinander vorgesehen. Bei einem Innenrohrelement mit rechteckigem oder quadratischem Querschnitt mit abgerundeten Ecken sind vorteilhaft die Durchtrittsöffnungen an den Ecken vorgesehen.

Vorzugsweise besteht der Spannring aus einem Edelstahlband.

Bei einer vorteilhaften Ausführungsform sind die Durchtrittsöffnungen als nutartige, in Rohrlängsrichtung verlaufende Ausnehmungen in der Außenwandung des Innenrohrelementes ausgebildet. Vorzugsweise sind die nutartigen Ausnehmungen sich vom Rohrende zur Rohrmitte hin verjüngend ausgebildet.

Bei einer weiteren vorteilhaften Ausführungsform sind die Durchtrittsöffnungen durch im wesentlichen U-förmige Auskröpfungen des Spannringes ausgebildet.

Bei einer anderen vorteilhaften Ausführungsform sind die Durchtrittsöffnungen jeweils durch zwei im Abstand zueinander zwischen Spannring und Außenmantel eingesetzte Keile gebildet. Vorzugweise sind die Enden der Keile keilförmig ausgebildet.

Vorteilhaft sind die Keile als Schenkel einer U-förmigen Klammer ausgebildet. Vorzugsweise hat die Klammer einen mittleren, den Spannring außen übergreifenden Rastschenkel.

Bei einer weiteren vorteilhaften Ausführung besteht der einstückige Spannring aus kreisförmigen, eine mittlere Durchtrittsöffnung aufweisenden, durch schmale Stege miteinander verbundenen Augen, wobei die Durchtrittsöffnungen zwischen Spannring und Außenmantel jeweils durch Umbiegen der die Stege überragenden Abschnitte zweier benachbarter Augen gebildet sind.

Bei einer weiteren vorteilhaften Ausführungsform sind die die Durchtrittsöffnungen bildenden U-förmigen Auskröpfungen des Spannringes sich zum benachbarten Rohrende hin trichterförmig vergrößernd ausgebildet sind.

Bei einer vorteilhaften Ausführungsform eines Abstandhalterelementes sind die beiden im Abstand zueinander verlaufenden Schenkelabschnitte des Anlageschenkels an ihren Enden etwa halbkreisförmig miteinander verbunden ausgebildet, wobei der doppelte Radius der halbkreisförmigen Verbindung etwas größer als die Länge der die Durchtrittsöffnungen bildenden U-förmigen Auskröpfungen des Spannringes in Rohrumfangsrichtung ist. Vorzugsweise hat das Abstandhalterelement zwei in einem Winkel von ca. 45° zueinander stehende, abgewinkelte Abstandhalter.

Die Erfindung ist in den Zeichnungen beispielhaft dargestellt. Es zeigen:
- Fig. 1: eine Befestigungsvorrichtung mit Spannring und nutartigen Ausnehmungen in der Außenwandung des Innenrohrelementes in perspektivischer Darstellung mit Abstandhalterelementen,
- Fig. 2: eine Befestigungsvorrichtung mit U-förmigen Auskröpfungen und Abstandhalterelementen in perspektivischer Ansicht,
- Fig. 3 bis 5: einen Spannring nach Fig. 2 in unterschiedlichen Anordnungsschritten auf einem Innenrohrelement im Querschnitt,
- Fig. 6: eine Befestigungsvorrichtung mit durch Klammern auf dem Innenrohrelement festgelegten Spannring mit Abstandhalterelementen in perspektivischer Darstellung,
- Fig. 7 bis 9: die Anordnung eines Spannringes mit Hilfe von Klammern in unterschiedlichen Herstellungsschritten im Querschnitt,
- Fig. 10 und 11: Befestigungsvorrichtungen mit einem Lochband als Spannring und Abstandhalterelementen in perspektivischer Darstellung,
- Fig. 12 bis 14: die Anordnung eines Lochbandes auf einem Innenrohrelement in unterschiedlichen Stellungen im Querschnitt und
- Fig. 15 bis 19: eine Befestigungsvorrichtung mit Spannring und bügelförmigen Abstandhalterelementen in perspektivischer Darstellung in unterschiedlichen Stellungen.

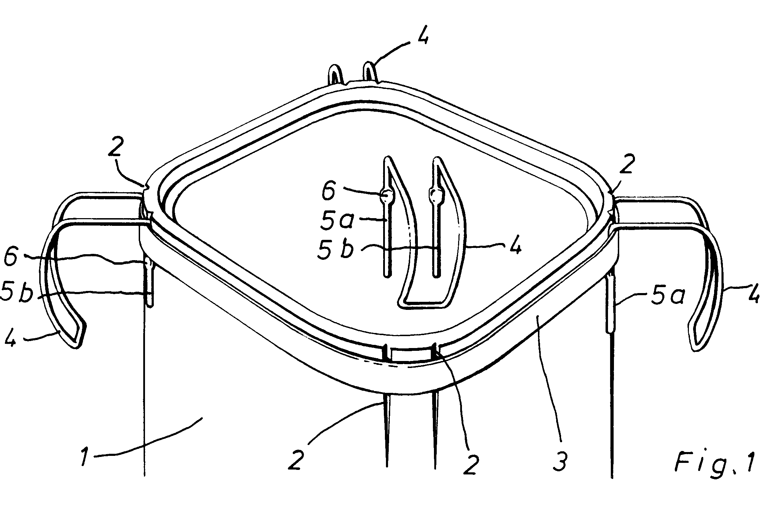

Nach Fig. 1 sind an den abgerundeten Ecken eines quadratischen Innenrohrelementes 1 aus Schamotte im Abstand zueinander jeweils zwei Ausnehmungen 2 angeordnet. Die Ausnehmungen verlaufen in Rohrlängsrichtung, wobei sie sich vom Rohrende in Richtung zur Mitte hin keilförmig verjüngen.

Wie die Fig. 1 weiter zeigt, ist nahe dem Rohrende um die Außenwandung des Innenrohrelementes 1 ein umlaufender Spannring 3 aus einem Edelstahlband angeordnet. Abstandhalterelemente 4 weisen zwei im Abstand nebeneinander angeordnete Anlageschenkelabschnitte 5a und 5b auf, mit denen sie in die Ausnehmungen 2 einschiebbar sind. Rastaugen 6 der Anlageschenkelabschnitte 5a, 5b untergreifen in eingeschobenen Zustand den Spannring 3, so daß die Abstandhalterelemente 4 gesichert sind.

Die Anlageschenkelabschnitte 5a und 5b verhindern ein Drehen der Abstandhalterelemente 4 in einer radialen Ebene, während durch die Breite des Spannringes 3 ein Kippen der Abstandhalterelemente 4 vermieden ist.

Zur Baustelle werden die benötigte Anzahl der Schornsteinelemente angeliefert, wobei beispielsweise jedes vierte Innenrohrelement einen Spannring 3 trägt.

Beim Aufbau des Schornsteines ist es daher lediglich nötig, jeweils die Abstandhalterelemente 4 in einfacher Weise in die Ausnehmungen 2 einzuschieben, wobei die mit Spannring gelieferten Innenrohrelemente an das Anbringen der notwendigen Abstandhalterelemente 4 erinnern.

Die Abstandhalterelemente 4 können in bekannnter Weise durch Umbiegen od. dgl. mehr an die Dimensionierung des Schornsteines angepaßt werden. Dadurch, daß der Spannring 3 nahe dem einen Ende des Schornsteininnenrohrelementes 1 angeordnet ist, ist es auch möglich, das Schornsteininnenrohrelement mit einer Wärmedämmung od. dgl. zu versehen, die dann von den eingesetzten Abstandhalterelementen 4 übergriffen wird.

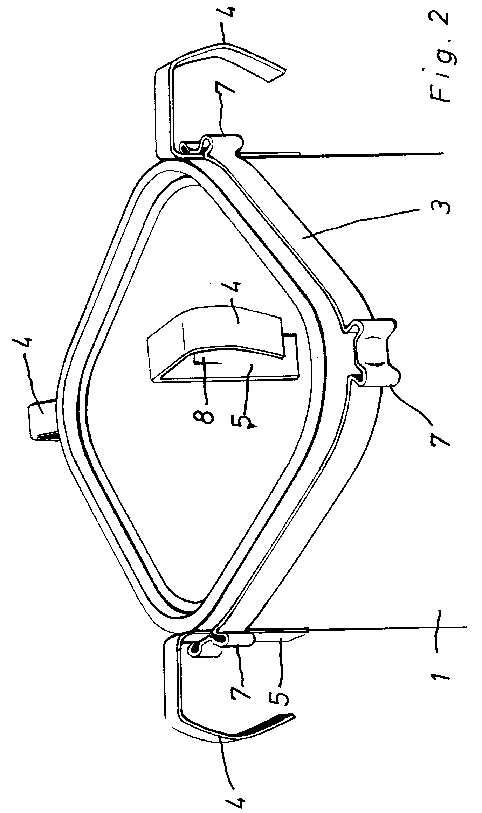

Bei der Ausführungsform einer Befestigungsvorrichtung nach Fig. 2 ist auf dem Innenrohrelement 1 ein Spannring 3 aus einem Edelstahlband angeordnet, der an den abgerundeten Ecken Auskröpfungen 7 hat. In die so zwischen Innenrohrelement 1 und den Auskröpfungen 7 gebildeten Durchtrittsöffnungen können, wie dies die Fig. 2 zeigt, Abstandhalterelemente 4 mit ihrem Anlageschenkel 5 eingeschoben werden, wobei eine Rastnase 8 den Spannring 3 untergreift. Die Anlageschenkel 5 weisen eine derartige Breite auf, daß eine ausreichende Verdrehsicherheit der Abstandhalterelemente 4 in einer radialen Ebene gegeben ist.

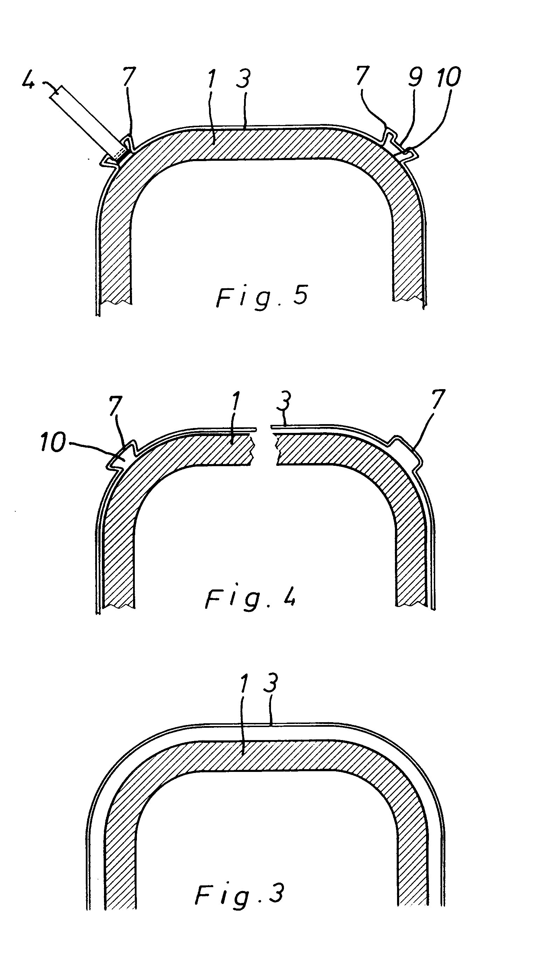

Wie die Fig. 3 bis 5 zeigen, wird der Spannring 3 zunächst lose mit Spiel um ein Innenrohrelement 1 gelegt und anschließend durch das Anbringen der Auskröpfungen 7, die auf einer geeigneten Vorrichtung gleichzeitig hergestellt werden können, auf dem Innenrohrelement 1 festgespannt.

Wie die Figuren zeigen, wird zunächst eine im wesentlichen U-förmige Auskröpfung 7 hergestellt, die dann anschließend schwalbenschwanzförmig verformt und schließlich mit einem mittleren Steg 9 versehen wird, so daß zwischen Schornsteininnenrohrelement 1 und Spannring 3 eine Durchtrittsöffnung 10 mit den gewünschten Abmessungen erhalten wird, in die ein Abstandhalterelement 4 mit seinem Anlageschenkel 5 eingesetzt werden kann und so sicher gehalten ist.

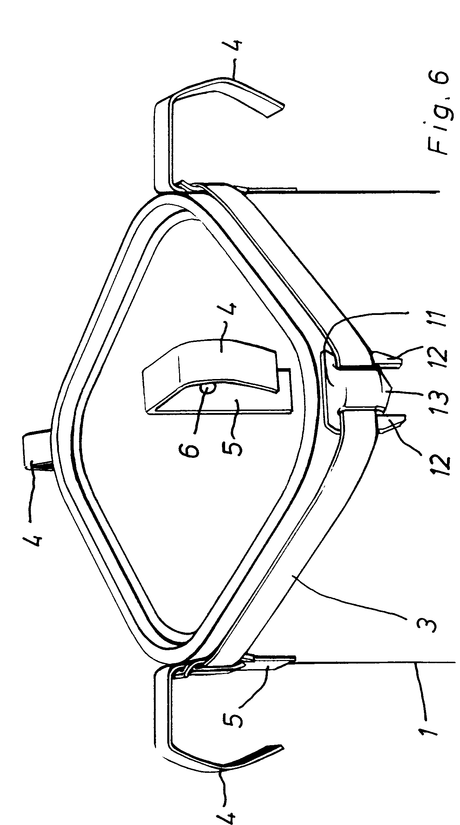

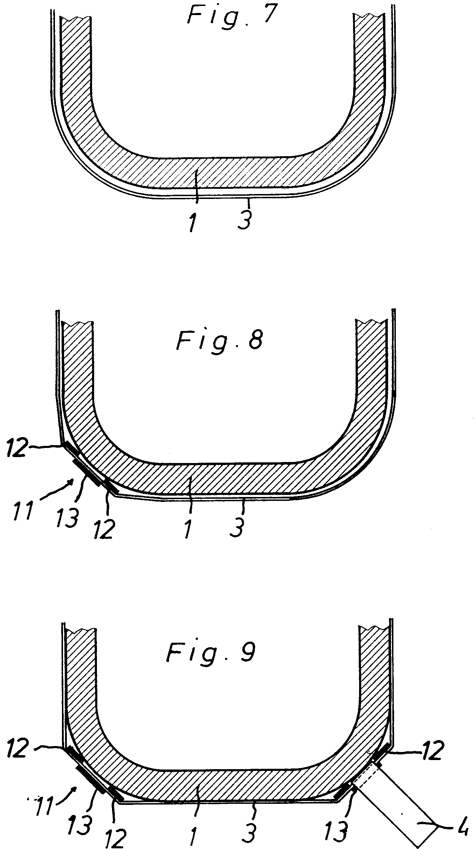

Wie die Fig. 6 bis 9 zeigen, wird bei einer weiteren Ausführungsform auf einem Innenrohrelement 1 ein Spannring 3 aus einem Edelstahlband mit Hilfe von Klammern 11 fest gespannt. Die Klammern 11 haben zwei im Abstand zueinander angeordnete, an ihren freien Enden keilförmig zulaufende Keile 12 sowie einen mittleren Rastschenkel 13, der in eingeschobenem Zustand den Spannring 3 außen übergreift und die Klammer 11 arretiert, wie dies insbesondere die Fig. 6, 8 und 9 zeigen. Durch das Einbringen der Klammern 11 wird der zunächst lose mit Spiel um das Innenrohrelement 1 gelegte Spannring (Fig. 7) auf dem Innenrohrelement 1 fest gespannt (Fig. 8 und 9), wobei gleichzeitig die notwendigen Durchtrittsöffnungen 10 für die Anlageschenkel 5 der Abstandhalterelemente 4 geschaffen werden.

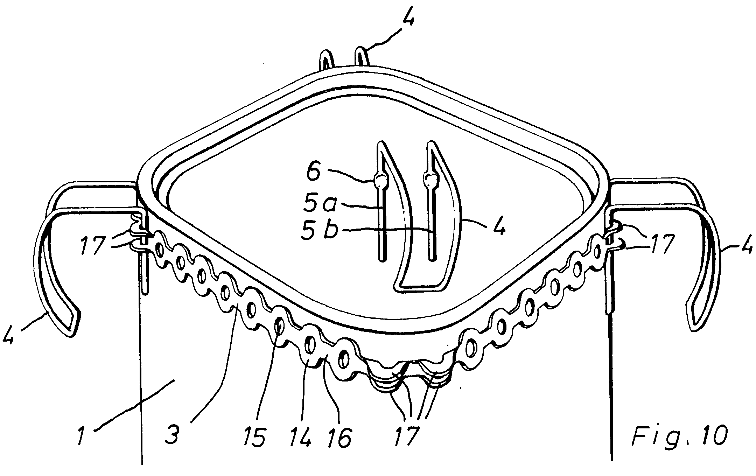

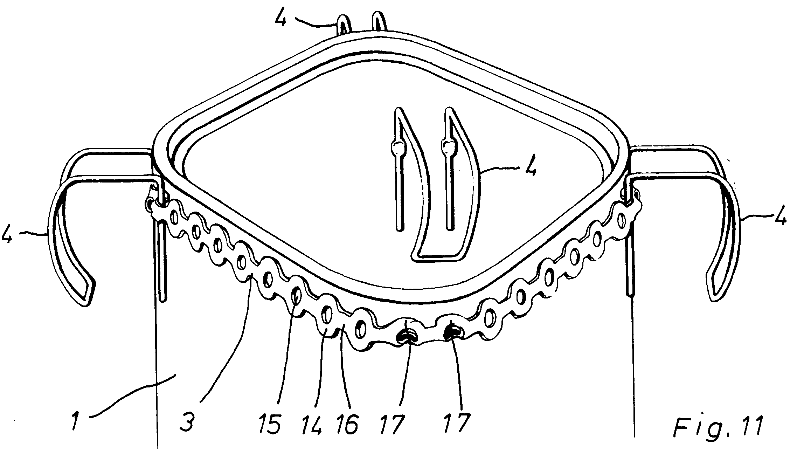

Bei der Ausführungsvorrichtung einer Befestigungsvorrichtung nach den Figuren 10 und 11 besteht der Spannring 3 aus einem Lochband aus Edelstahl, das Augen 14 mit einer mittleren Durchtrittsöffnung 15 hat, die durch schmale Stege 16 miteinander verbunden sind.

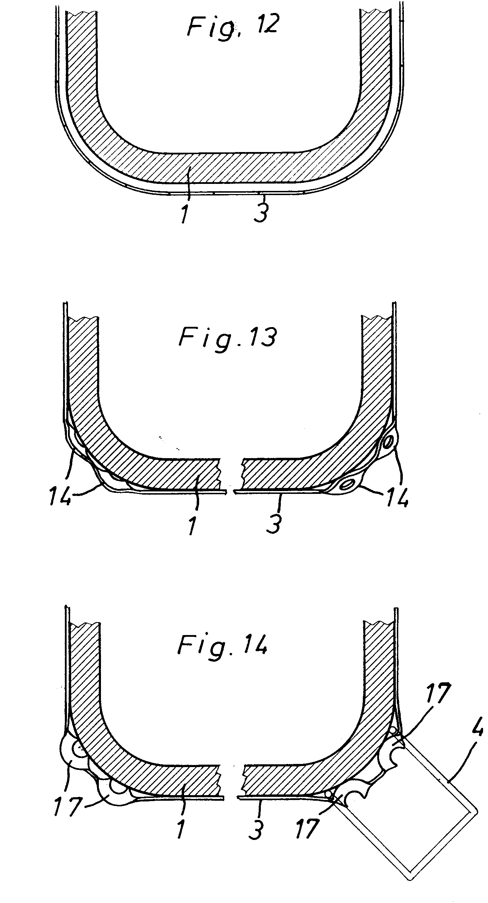

Wie die Fig. 10 und 14, insbesondere die Fig. 12 und 14 zeigen, wird das Lochband als vorgefertigter Spannring mit Spiel um das Schornsteininnenrohrelement 1 gelegt und dadurch auf dem Schornsteininnenrohrelement festgelegt, daß die die Stege 16 überragenden Abschnitte 17 der Augen 14 nach außen (Fig. 10) oder nach innen (Fig. 11) umgebogen werden. In die so gebildeten Durchtrittsöffnungen können die Anlageschenkelabschnitte 5 der Abstandhalter 4 eingesetzt werden.

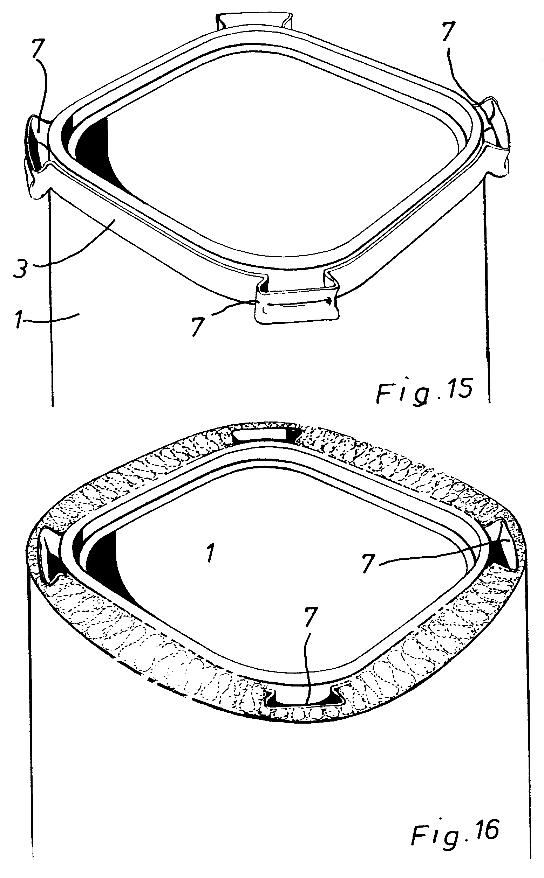

Bei der Ausführungsform der Befestigungsvorrichtung nach Fig. 15 werden die Durchtrittsöffnungen durch im wesentlichen U- bzw. trapez-förmigen Querschnitt aufweisende Auskröpfungen 7 des Spannringes 3 gebildet. Diese Auskröpfungen 7 erweitern sich zum benachbarten Rohrende des Innenrohrelementes 1 trichterförmig, wie dies insbesondere die Fig. 16 zeigt, in der das Innenrohrelement 1 von einer Wärmedämmschicht umgeben ist.

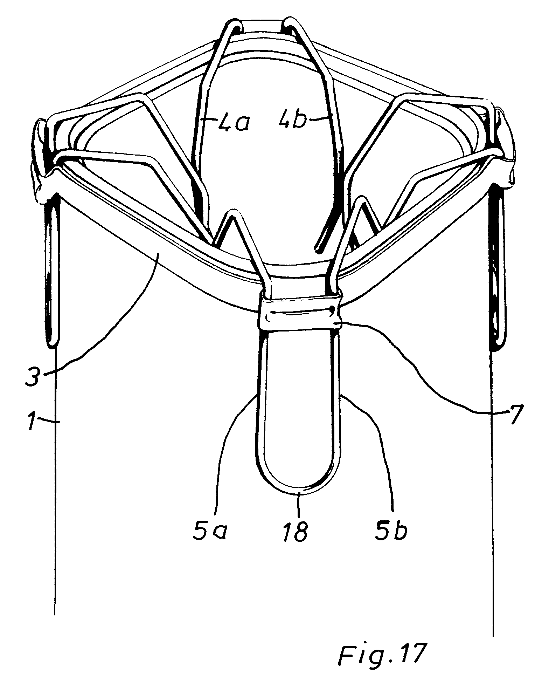

Wie die Fig. 17 bis 19 zeigen, sind die beiden im Abstand zueinander verlaufenden Schenkelabschnitte 5a und 5b des Abstandhalterelementes an ihren Enden etwa halbkreisförmig miteinander verbunden. Der doppelte Radius der halbkreisförmigen Verbindung 18 ist etwas größer als die Länge der Auskröpfungen 7 des Spannringes 3. Weiterhin haben die Abstandhalterelemente zwei in einem Winkel von ca. 45° zueinander stehende abgewinkelte Abstandhalter 4a und 4b.

Das Innenrohrelement 1 wird vorgefertigt mit Spannband 3 und Abstandhalterelemente geliefert, wie dies in Fig. 17 dargestellt ist. Wahlweise kann das Schornsteininnenrohr 1 auch mit einer Wärmedämmung entsprechend der Darstellung in Fig. 16 versehen sein. Die Abstandhalterelement sind in die U-förmigen Auskröpfungen des Spannringes 3 eingesetzt, wobei die Abstandhalter 4a und 4b sich im Rohrinnern befinden, wie dies die Fig. 17 zeigt.

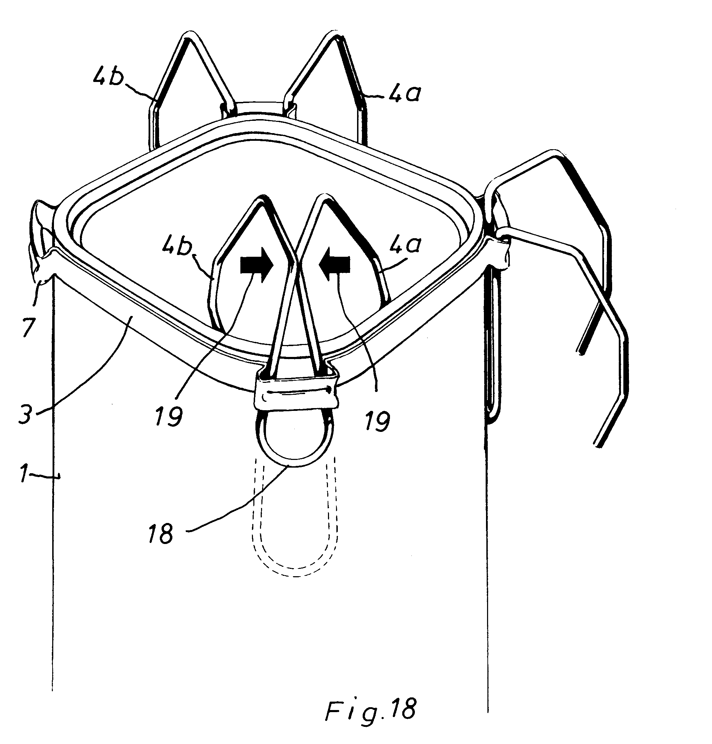

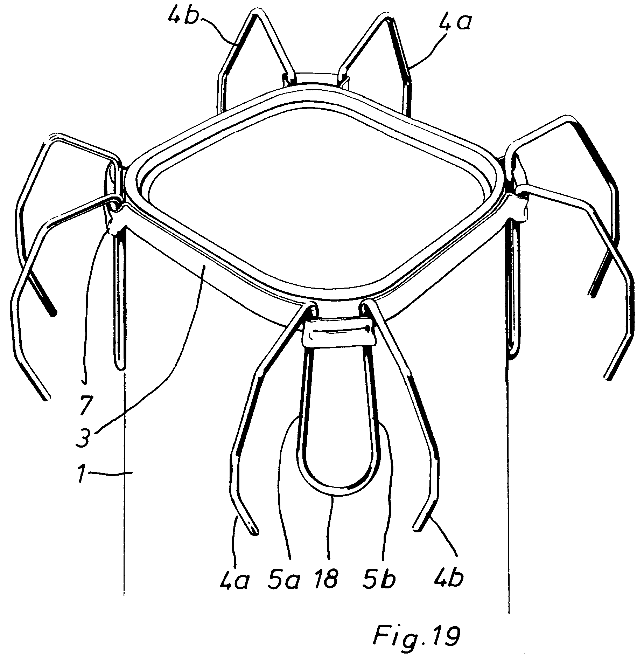

Zur Verwendung an der Einsatzstelle werden die Abstandhalterelemente und damit die Schenkelabschnitte 5a und 5b zusammengepreßt, wie dies in Fig. 18 die mit 19 bezeichneten Pfeile zeigen. Dadurch verringert sich der Krümmungsradius der halbkreisförmigen Verbindung 18, so daß das Abstandhalterelement aus den Auskröpfungen 7 des Spannrings 3 nach oben herausgezogen werden kann und in Arbeitsstellung in die Auskröpfungen 7 eingesetzt werden kann, wie dies die Fig. 19 zeigt. Durch diese Ausbildung der Abstandhalterelemente sind die Abstandhalterelemente sicher in den Auskröpfungen 7 gehalten, sind jedoch in den Auskröpfungen bei Ausdehnungen des Innenrohrs durch Wärmebelastung in axialer Richtung über einen gewissen Bereich verschiebbar.

Die trichterförmige Erweiterung der Auskröpfungen 7 erleichtert dabei das Einführen der Abstandhalterelemente. Durch die im Winkel von ca. 45° zueinanderstehenden Abstandhalter 4a und 4b ist eine sichere Führung des Innenrohrelementes gewährleistet, wobei ein Umklappen der Abstandhalter verhindert ist.

Den Ausführungen der erfindungsgemäßen Befestigungsvorrichtung ist gemeinsam, daß die notwendige Anzahl der Innenrohrelemente 1 mit den vorgefertigten und befestigten Spannringen 3 werkseitig geliefert wird, so daß die mitgelieferten Abstandhalterelemente 4 bei der Herstellung des Schornsteines in einfacher Weise eingesetzt werden können. Die Spannringe gewährleisten wegen ihrer Elastizität und mit ihren Auskröpfungen eine Ausdehnbarkeit des Innenrohrelementes 1 bei Wärmebelastung in radialer und axialer Richtung.

## Patentansprüche

1. Befestigungsvorrichtung für Abstandhalter an einem Innenrohrelement, vorzugsweise an einem Innenrohrelement aus Schamotte, Beton od. dgl. eines mehrschaligen Schornsteins, gekennzeichnet durch einen auf der Außenwandung des Innenrohrelementes (1) angeordneten umlaufenden Spannring (3), wobei im Abstand zueinander zwischen Spannring und Außenwandung in Rohrlängsrichtung verlaufende Durchtrittsöffnungen vorhanden sind, in die jeweils ein Abstandhalterelement (4) mit einem in Rohrlängsrichtung verlaufenden Anlageschenkel (5) einsetzbar ist.

2. Befestigungsvorrichtung nach Anspruch 1, dadurch gekennzeichnet, daß die Anlageschenkel (5) der Abstandhalterelemente (4) eine Rastnase (6, 8) od. dgl. zum Einrasten am oder unter dem Spannring (3) haben.

3. Befestigungsvorrichtung nach Anspruch 1 oder 2, dadurch gekennzeichnet, daß zur Verdrehsicherung die Anlageschenkel (5) bzw. die Durchtrittsöffnungen in Rohrumfangsrichtung eine ausreichende Breite aufweisen.

4. Befestigungsvorrichtung nach Anspruch 1 oder 2, dadurch gekennzeichnet, daß zur Verdrehsicherung der Anlageschenkel (5) zwei im Abstand zueinander verlaufende Schenkelabschnitte (5a, 5b) hat, die in zugeordnete Durchtrittsöffnungen zwischen Außenwandung und Spannring (3) einrastbar sind.

5. Befestigungsvorrichtung nach einem der Ansprüche 1 bis 4, dadurch gekennzeichnet, daß der Spannring (3) nahe einem Rohrende am Innenrohrelement (1) angeordnet ist.

6. Befestigungsvorrichtung nach einem der Ansprüche 1 bis 5, dadurch gekennzeichnet, daß mindestens drei Durchtrittsöffnungen zwischen Spannring (3) und Außenwandung im Abstand zueinander vorgesehen sind.

7. Befestigungsvorrichtung nach einem der Ansprüche 1 bis 6, dadurch gekennzeichnet, daß bei einem Innenrohrelement (1) mit rechteckigem oder quadratischem Querschnitt mit abgerundeten Ecken die Durchtrittsöffnungen an den Ecken vorgesehen sind.

8. Befestigungsvorrichtung nach einem der Ansprüche 1 bis 7, dadurch gekennzeichnet, daß der Spannring (3) aus einem Edelstahlband besteht.

9. Befestigungsvorrichtung nach einem der Ansprüche 1 bis 8, dadurch gekennzeichnet, daß die Durchtrittsöffnungen als nutartige, in Rohrlängsrichtung verlaufende Ausnehmungen (2) in der Außenwandung des Innenrohrelementes (1) ausgebildet sind.

10. Befestigungsvorrichtung nach Anspruch 9, dadurch gekennzeichnet, daß die nutartigen Ausnehmungen (2) sich vom Rohrende zur Rohrmitte hin verjüngend ausgebildet sind.

11. Befestigungsvorrichtung nach einem der Ansprüche 1 bis 8, dadurch gekennzeichnet, daß die Durchtrittsöffnungen durch im wesentlichen U-förmige Auskröpfungen (7) des Spannringes (3) gebildet sind.

12. Befestigungsvorrichtung nach einem der Ansprüche 1 bis 8, dadurch gekennzeichnet, daß die Durchtrittsöffnungen jeweils durch zwei im Abstand zueinander zwischen Spannring (3) und Außenmantel eingesetzte Keile (12) gebildet sind.

13. Befestigungsvorrichtung nach Anspruch 12, dadurch gekennzeichnet, daß die freien Enden der Keile (12) keilförmig ausgebildet sind.

14. Befestigungsvorrichtung nach Anspruch 12 oder 13, dadurch gekennzeichnet, daß die Keile (12) als Schenkel einer U-förmigen Klammer (11) ausgebildet sind.

15. Befestigungsvorrichtung nach Anspruch 14, dadurch gekennzeichnet, daß die Klammer (11) einen mittleren, den Spannring (3) außen übergreifenden Rastschenkel (13) hat.

16. Befestigungsvorrichtung nach einem der Ansprüche 1 bis 8, dadurch gekennzeichnet, daß der einstückige Spannring (3) aus kreisförmigen, eine mittlere Durchtrittsöffnung (15) aufweisenden, durch schmale Stege (16) miteinander verbundenen Augen (14) besteht, wobei die Durchtrittsöffnungen zwischen Spannring und Außenwandung jeweils durch Umbiegen der die Stege überragenden Abschnitte (17) zweier benachbarter Augen gebildet sind.

17. Befestigungsvorrichtung nach Anspruch 1, dadurch gekennzeichnet, daß die die Durchtrittsöffnungen bildenden U-förmigen Auskröpfungen (7) des Spannringes (3) sich zum benachbarten Rohrende hin trichterförmig vergrößernd ausgebildet sind.

18. Befestigungsvorrichtung nach Anspruch 4, dadurch gekennzeichnet, daß die beiden im Abstand zueinander verlaufenden Schenkelabschnitte (5a, 5b) des Anlageschenkels an ihren Enden etwa halbkreisförmig miteinander verbunden ausgebildet sind, wobei der doppelte Radius der halbkreisförmigen Verbindung etwas größer als die Länge der U-förmigen Auskröpfungen (7) des Spannringes (3) in Rohrumfangsrichtung sind.

19. Befestigungsvorrichtung nach Anspruch 18, dadurch gekennzeichnet, daß das Abstandhalterelement zwei in einem Winkel von ca. 45° zueinander stehende abgewinkelte Abstandhalter (4a, 4b) hat.
